# EUROPEAN PATENT APPLICATION

(11) **EP 4 354 609 A1**
(43) Date of publication of application: **17.04.2024**
(21) Application number: 21968638.3
(22) Date of filing: 24.12.2021
(51) Int. Cl.: H01M 50/172

(54) **BATTERY, BATTERY CELL, BATTERY MODULE, ELECTRICAL DEVICE, END COVER ASSEMBLY, AND END COVER ASSEMBLY MANUFACTURING METHOD**

(71) Applicant: Contemporary Amperex Technology Co., Limited, Ningde, Fujian 352100 (CN)
(72) Inventor: HUANG, Siying, Ningde, Fujian 352100 (CN); WU, Shengkai, Ningde, Fujian 352100 (CN); LI, Long, Ningde, Fujian 352100 (CN)
(74) Representative: von Tietzen und Hennig, Nikolaus
(86) International application number: PCT/CN2021/141021
(87) International publication number: WO 2023/115498

(57) **Abstract**

Embodiments of the present application provide an end cap assembly, a battery cell, a battery module, a battery, an electrical device, and a manufacturing method for the end cap assembly. The end cap assembly is applied to the battery cell and includes: an end cap sheet, electrode columns, and adapter sheets; the end cap sheet is provided with electrode through holes; the electrode columns are configured for inputting or outputting electric energy of the battery cell, the electrode columns cover the electrode through holes, each electrode column is provided with a first concave portion recessed towards an interior of the battery cell; and each of the adapter sheets is provided with a second concave portion matching with the first concave portion, and configured for electrically connecting the electrode columns with an electrolytic cell or a galvanic cell inside the battery cell. The embodiments of the present application have lower requirements on fitting dimensional tolerances and can also improve the yield of the product.

## Description

### TECHNICAL FIELD

The present application relates to the field of batteries, and more particularly to an end cap assembly, a battery cell, a battery module, a battery, an electrical device, and a manufacturing method.

### BACKGROUND

Nowadays, the new energy industry is getting more and more attention, therefore, higher requirements have been put forward for the battery as a core component, such as, the requirement for the battery to achieve higher energy density and lower cost, etc.

At present, a battery shell generally includes a housing and an end cap assembly, the battery shell provides a closed space to accommodate the electrode assembly and the electrolyte, and the electrical energy of the electrode assembly is led out through the electrode columns and other structures of the end cap assembly. In the existing end cap assembly, the electrode columns and the adapter sheets are connected by welding, the requirement on the dimensional tolerance of the fittings is very high, and the fraction defective of the product is high.

### SUMMARY

The embodiments of the present application embodiment provide an end cap assembly, a battery cell, a battery module, a battery, an electrical device, and a manufacturing method, which have a low requirement on the dimensional tolerance of fittings, and can improve the yield of the product significantly.

In a first aspect, an end cap assembly is provided, which is applied to a battery cell and includes: an end cap sheet, electrode columns, and adapter sheets; the end cap sheet is provided with electrode through holes; the electrode columns are configured for inputting or outputting electric energy of the battery cell, the electrode columns cover the electrode through holes, each electrode column is provided with a first concave portion recessed towards an interior of the battery cell; and each of the adapter sheets is provided with a second concave portion matching with the first concave portion, and configured for electrically connecting the electrode columns with an electrolytic cell or a galvanic cell inside the battery cell.

In the end cap assembly of an embodiment of the present application, since the electrode columns are fixedly connected with the adapter sheets through the first concave portion and the second concave portion. Therefore, particle impurities generated during welding of the electrode columns and the adapter sheets can be avoided and the yield of the product can be improved. On the other hand, since the end cap assembly of the embodiment of the present application has lower requirements for fitting dimensional tolerances compared to the welded connected structure, it can also improve the yield of the product.

In some embodiments, an angle θ formed between an inner side wall of the second concave portion and an inner bottom wall of the second concave portion is less than 90°. Thus, the first concave portion can be embedded into the structure formed between the inner side wall of the second concave portion and the inner bottom wall of the second concave portion, so that the first concave portion is limited by the side wall of the second concave portion and is difficult to be pulled out, and the connection between the electrode columns and the adapter sheets is improved.

In some embodiments, an outer side wall of the first concave portion is tightly fitted with an inner side wall of the second concave portion. Thus, the first concave portion and the second concave portion are connected to each other in a larger area, which can improve the connection between the electrode columns and the adapter sheets.

In some embodiments, the electrode column is provided with a third concave portion recessed towards an interior of the battery cell, and the first concave portion is recessed from a bottom of the third concave portion towards the interior of the battery cell. By forming the third concave portion on the electrode column, cracks caused by excessive deformation of the electrode column and/or adapter sheet during the connecting and fixing of the electrode column and adapter sheet can be avoided.

In some embodiments, the adapter sheet is provided with a convex portion protruding away from the interior of the battery cell, and the second concave portion is recessed from a top of the convex portion towards the interior of the battery cell. By forming the convex portion on the adapter sheet, cracks caused by excessive deformation of the electrode column and/or adapter sheet during the connecting and fixing of the electrode column and adapter sheet can be further avoided.

In some embodiments, a bottom of the third concave portion is tightly fitted with the top of the convex portion, to fixedly connect to the top of the convex portion. Thus, the connection area between the electrode column and the adapter sheet is larger, and the connection between the electrode column and the adapter sheet is further improved.

In some embodiments, the end cap assembly further includes a sealing member, sandwiched between the end cap sheet and the adapter sheet, and configured for sealing the interior of the battery cell and the electrode through holes. Thus, the electrolyte inside the battery cell can be reliably prevented from flowing out of the electrode through hole to ensure the sealing performance of the battery cell.

In some embodiments, the end cap assembly further includes an insulation assembly, and the insulation assembly includes a first insulation member adjacent to the electrode through hole along a direction perpendicular to a penetrating direction of the electrode through hole, the first insulation member is configured for insulating the electrode column and the end cap sheet, and/or insulating the adapter sheet and the end cap sheet. Thus, the adapter sheet and the end cap sheet can be separated by the first insulation member and the sealing member to avoid short circuit, and the end cap sheet can be sealed more reliably by the sealing member together with the first insulation member.

In some embodiments, the insulation assembly includes a second insulation member away from the electrode through hole along the direction perpendicular to the penetrating direction of the electrode through hole, and the second insulation member is configured for insulating the adapter sheet and the end cap sheet. Thus, the end cap sheet and the adapter sheet can be reliably separated to avoid short circuit, and the end cap sheet can be sealed more reliably by the sealing member together with the first insulation member.

In some embodiments, the sealing member is located between the first insulation member and the second insulation member along the direction perpendicular to the penetrating direction of the electrode through hole. Thus, the sealing member is fixed by the first insulation member and the second insulation member, to seal the end cap sheet more reliably.

In some embodiments, the first insulation member comprises an extension portion extending into the electrode through hole to separate the end cap sheet from the electrode column and/or the adapter sheet. Thus, the extension portion separates the end cap sheet from the electrode column and/or adapter sheet protruding into the electrode through hole, and the occurrence of a short circuit can be avoided more reliably.

In some embodiments, an insulation sheet is arranged between the electrode column and the end cap sheet. Thus, the insulation sheet separates the end cap sheet from the electrode column, and the occurrence of a short circuit can be avoided more reliably.

In a second aspect, the present application provides a battery cell, which includes the end cap assembly of the first aspect.

In a third aspect, the present application provides a battery module, which includes the battery cell of the second aspect.

In a fourth aspect, the present application provides a battery , which includes the battery module of the third aspect.

In a fifth aspect, the present application provides an electrical device, which includes the battery of the fourth aspect.

In a sixth aspect, the present application provides a manufacturing method for an end cap assembly, which includes: providing an end cap sheet provided with electrode through holes; providing electrode columns configured for inputting or outputting electric energy of the battery cell, wherein the electrode columns cover the electrode through holes, each electrode column is provided with a first concave portion recessed towards an interior of the battery cell; and providing adapter sheets, wherein each of the adapter sheets is provided with a second concave portion matching with the first concave portion, and configured for electrically connecting the electrode columns with an electrolytic cell or a galvanic cell inside the battery cell.

The above description is only a summary of the technical solution of the present application. In order to better understand the technical means of the present application, it can be implemented in accordance with the contents of the specification, and in order to make the above and other purposes, features and advantages of the present application more clearly understand, the specific implementation of the present application is listed below.

### BRIEF DESCRIPTION OF THE DRAWINGS

By reading the detailed description of the preferred embodiments below, various other advantages and benefits will become clear to those skilled in the art. The drawings are intended only for the purpose of indicating preferred embodiments and are not considered to be a limitation of the present application. In addition, in all drawings, the same reference sign is used to represent the same component. In the accompanying pictures:
FIG. 1 is a structural schematic view of a vehicle in some embodiments of the present application;
FIG. 2 is a structural schematic view of a battery in some embodiments of the present application;
FIG. 3 is a structural schematic view of a battery module in some embodiments of the present application;
FIG. 4 is a structural schematic view of a battery cell in some embodiments of the present application;
FIG. 5 is an explosion view of an end cap assembly in some embodiments of the present application;
FIG. 6 is a top view of the end cap assembly after assembled in FIG. 5;
FIG. 7 is a cross-sectional view of the end cap assembly along an A-A direction in FIG. 6;
FIG. 8 is an enlarged view of an area X in FIG. 7;
FIG. 9 is a structural schematic view of an electrode column and an adapter sheet in some embodiments of the present application;
FIG. 10 is a schematic view of an end cap assembly in some embodiments of the present application and the corresponding portion of FIG. 8;
FIG. 11 is a structural schematic view of an electrode column and an adapter sheet in some embodiments of the present application;
FIG. 12 is structural schematic view of a first insulation member; and
FIG. 13 is a flowchart of a manufacturing method for an end cap assembly in some embodiments of the present application.

In the specific embodiments, the reference signs are listed:
vehicle 800; motor 400; controller 300; battery 500; box body 600; first housing 601; second housing 602;
battery cell 101; battery module 100; end plate 105; cable tie 102; CCS 103; output electrode 104;
shell plate 50; electrode assembly 40; shell 20; main portion 41; tab 42; positive tab 421; negative tab 422;
end cap assembly 30; end cap sheet 301; electrode through hole 302; positive electrode through hole 302a; negative electrode through hole 302b; electrode column 303; positive electrode column 303a; negative electrode column 303b; adapter sheet 304; positive electrode adapter sheet 304a; negative electrode adapter sheet 304b; first concave portion 305; first concave bottom portion 305a; first concave side wall 305b; second concave portion306; second concave bottom portion306a; second concave side wall 306b; third concave portion 307; third concave bottom portion 307a; third concave side wall 307b; convex portion 308; convex top portion 308a; convex side wall 308b; sealing member 309; insulation assembly 310; first insulation member 310a; second insulation member 310b; insulation sheet 311.

### DETAILED DESCRIPTION OF EMBODIMENTS

Embodiments of the present application will be described in detail in combination with the attached drawings below. The following embodiments are intended only to more clearly illustrate the technical solution of the present application and are therefore intended as examples only and cannot be used to limit the scope of protection of the present application.

Unless otherwise defined, all technical and scientific terms used herein have the same meaning as normally understood by those skilled in the art for which the present application is made; the terms used herein are for the purpose of describing specific embodiments only and are not intended to restrict the present application; the terms "includes" and "has" in the specification and claims of the present application and in the accompanying illustrations above, and any variation thereof, are intended to cover non-exclusive inclusion. In the description of the present application embodiment, the technical terms "first", "second", etc., are used only to distinguish different objects and are not to be construed as indicating or implying relative importance or as implicitly indicating the number, particular order or primary or secondary relationship of the indicated technical features.

Reference to "embodiments" in the present application means that a particular feature, structure or characteristic described in conjunction with an embodiment may be included in at least one embodiment of the present application. The occurrence of the phrase at various locations in the specification does not necessarily refer to the same embodiment, nor is it a separate or alternative embodiment that is mutually exclusive with other embodiments. It is understood, both explicitly and implicitly, by those skilled in the art that embodiments described herein may be combined with other embodiments.

In the description of the present application embodiment, unless there is additional explicit stipulation and limitation, terms such as "mount", "connect with each other", "connect", "fix", and so on should be generalizedly interpreted, for example, "connect" can be interpreted as being fixedly connected, detachably connected, or connected integrally; "connect" can also be interpreted as being mechanically connected or electrically connected; "connect" can be further interpreted as being directly connected or indirectly connected through intermediary, or being internal communication between two components or an interaction relationship between the two components. For the one of ordinary skill in the art, the specific meanings of the aforementioned terms in the present application can be interpreted according to specific conditions.

In the description of embodiments of the present application, the term "and/or" is only a kind of association relation describing the associated object, indicating that there can be three kinds of relations, such as A and/or B, which can mean: A alone, A and B simultaneously, and B alone. In addition, the character "/" in the present application generally means that the related object is an "or" relationship.

In the present application, "a plurality of" means more than two (including two), in the same way that "a plurality of groups" means more than two groups (including two groups), and "a plurality of sheets" means more than two sheets (including two sheets).

In the present application, the battery cell includes a lithium-ion secondary battery, a lithium-ion primary battery, a lithium-sulfur battery, a sodium-lithium ion battery, a sodium-ion battery, or a magnesium ion battery, etc., which is not limited in the embodiments of the present application. The battery cell can be in a shape of a cylindrical, a flat, a cuboid or other shapes, which is not limited in the embodiments of the present application. Battery cells are generally divided into three types according to the way of encapsulating: cylindrical battery cells, square square battery cells, and soft pack battery cells, which is not limited in the embodiments of the present application.

The battery referred to in embodiments of the present application is a single physical module including one or more battery cells to provide higher voltage and capacity. For example, the battery referred to in the present application may include battery modules or battery packs, etc. The battery generally includes a box body for encapsulating one or more battery cells. The box body can prevent liquids or other foreign objects from affecting the charging or discharging of the battery cells.

The battery module referred to in embodiments of the present application includes a plurality of battery cells and a frame structure for fixing the battery cells, and the plurality of battery cells are stacked on each other. The frame structure includes an end plate located at both ends of the battery module for limiting the movement of the battery cells, in one specific embodiment, the frame structure further includes a side plate fixedly connected with the end plate to sandwich the battery. The output electrode of the battery and the output electrode base are mounted onto the end plate, and the electrical signal in the battery module is transmitted to the outside of the battery module through the output electrode.

The battery cell referred to in embodiments of the present application includes an electrode assembly consisting of a positive electrode sheet, a negative electrode sheet and an isolation diaphragm, and an electrolyte. The battery cell operates mainly by moving metal ions between the positive electrode sheet and the negative electrode sheet. The positive electrode sheet includes a positive current collector and a positive active substance layer. The positive active substance layer is coated on the surface of the positive current collector, the current collector that is not coated with the positive active substance layer protrudes from the current collector that is coated with the positive active substance layer, and the current collector that is not coated with the positive active substance layer is used as a positive electrode tab. Taking the lithium-ion battery as an example, the material of the positive current collector can be an aluminum, and the positive active substance can be a lithium cobaltate, a lithium iron phosphate, a ternary lithium or a lithium manganate, etc. The negative electrode sheet includes a negative current collector and a negative active substance layer, the negative active substance layer is coated on the surface of the negative current collector, the current collector that is not coated with the negative active substance layer protrudes from the current collector that is coated with the negative active substance layer, and the current collector that is not coated with the negative active substance layer is used as a negative electrode tab. The material of the negative current collector can be a copper, and the negative active substance can be a carbon or a silicon, etc. In order to ensure that no fusing occurs through a large current, the number of positive electrode tabs is multiple and stacked together, and the number of negative electrode tabs is multiple and stacked together. The material of the isolation diaphragm can be PP or PE, etc. In addition, the electrode assembly has a winding structure or a a laminated structure, which is not limited in the embodiments of the present application.

The battery cell also includes a shell plate and an electrode assembly arranged in the shell plate, the shell plate includes an end cap assembly and a shell, the end cap assembly includes electrode columns and adapter sheets, and the electrode assembly includes electrode tabs, the electrode assembly is electrically connected with the electrode tabs through the adapter sheets for outputting electrical energy of the battery cell, or for connecting with an external power source to charge the battery cell.

In the end cap assembly of the existing battery cell, the electrode columns and the adapter sheets are usually connected by welding. Welding connection requires high dimensional tolerance of the accessories, and particle impurities are generated during welding. The particle impurities are absorbed in the battery cell due to static electricity, and even puncture the diaphragm and affect the battery life. Therefore, the defect rate of the product is higher.

In view of this, the present application provides an end cap assembly used to the battery cell, and the end cap assembly includes: an end cap sheet, electrode columns, and adapter sheets; the electrode column is provided with a first concave portion recessed towards an interior of the battery cell, the adapter sheet is provided with a second concave portion matching with the first concave portion. Since the electrode columns are fixedly connected with the adapter sheets through the first concave portion and the second concave portion. Therefore, particle impurities generated during welding of the electrode columns and the adapter sheets can be avoided, the present application has lower requirements for fitting dimensional tolerances and can also improve the yield of the product.

The technical solutions described in the embodiments of the present application are applicable to a variety of battery-using devices, such as a mobile phone, a portable device, a laptop computer, an electric cart, an electric toy, an electric tool, an electric vehicle, a ship, and a spacecraft, etc., the spacecraft includes such as an aircraft, a rocket, a space shuttle, and a spaceship.

It should be understood that the technical solution described in the embodiments of the present application is not limited to the devices described above, but may also be applicable to all devices using batteries. However, for the sake of brevity, the following embodiments are illustrated with electric vehicles as examples.

The following, specific embodiments of the present application are described in detail.

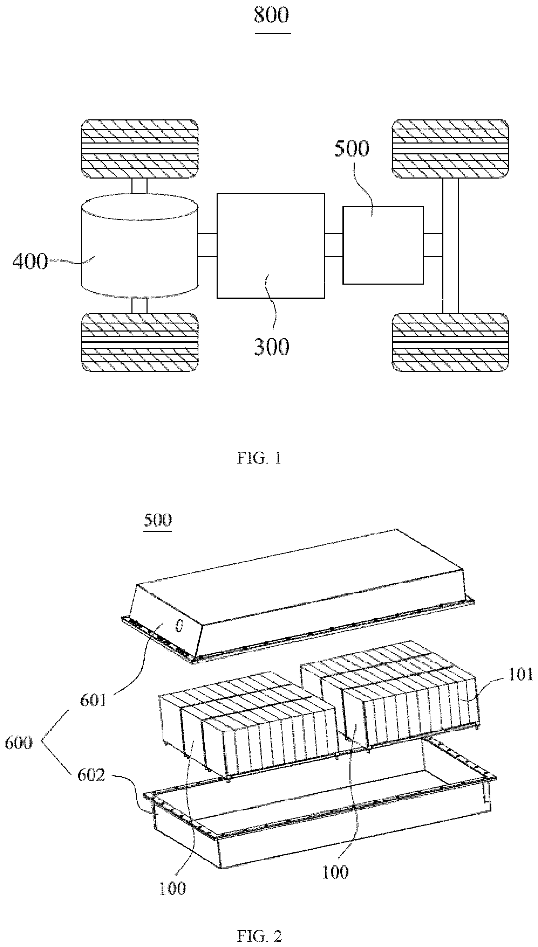

FIG. 1 is a structural schematic view of a vehicle 800 in an embodiment of the present application. The vehicle 800 can be a fuel vehicle, a gas vehicle or a new energy vehicle, the new energy vehicle can be a pure electric vehicle, a hybrid vehicle or an extended-range vehicle, etc. A motor 400, a controller 300 and a battery 500 can be arranged inside the vehicle, and the controller 300 is used to control the battery 500 to supply power to the motor 400. For example, the battery 500 can be arranged at the bottom of the vehicle or at the front or rear of the vehicle. The battery 500 can be used for the power supply of the vehicle, for example, the battery 500 can be used as the operating power supply of the vehicle, for the circuit system of the vehicle 800, for example, for the working power needs of the vehicle 800 during start-up, navigation and operation. In another embodiment of the present application, the battery 500 may be used not only as an operating power source for the vehicle 800, but also as a driving power source for the vehicle 800, substituting or partially substituting fuel oil or natural gas to provide driving power for the vehicle 800.

In order to meet different power needs, the battery can include a plurality of battery cells, and the plurality of battery cells can be connected in series or in parallel or in a combination of series and parallel, and the combination of series and parallel refers to the mixture of connected in series and connected in parallel. The battery can also be called a battery pack. In the embodiment, the plurality of battery cells are first connected in series or in parallel or in a combination of series and parallel to form a battery module, and a plurality of battery modules are then connected in series or in parallel or in a combination of series and parallel to form a battery. That is to say, a plurality of battery cells can be directly formed into a battery, or a battery module can be formed first, and a plurality of battery modules can then be formed into a battery.

FIG. 2 is a structural schematic view of a battery 500 in an embodiment of the present application. The battery 500 can include a plurality of battery cells 101. The battery 500 can further include a box body 600 (or cover body), the box body 600 is a hollow structure, the plurality of battery cells 1 are accommodated in the box body 600. As shown in FIG. 2, the box body 600 includes a first housing 601 and a second housing 602, and the first housing 601 and the second housing 602 are snap-fitted together. The shapes of the first housing 601 and the second housing 602 are determined according to the shape of the combination of the plurality of battery cells 101, and the first housing 601 and the second housing 602 each has an opening. For example, the first housing 601 and the second housing 602 are hollow cuboids with one face of each being an opened face, the opening of the first housing 601 and the opening of the second housing 602 are arranged opposite each other, and the first housing 601 and the second housing 602 are snap-fitted to form a box body with a closed cavity. The plurality of battery cells 101 are connected in series or in parallel or in a combination of series and parallel and then placed in the box body formed by snap-fitting the first housing 601 and the second housing 602.

The number of battery cells 101 can be arranged to any value depending on the power demand. The plurality of battery cells 101 can be connected in series, in parallel, or in a combination of series and parallel to achieve greater capacity or power. Since the battery 500 contains a large number of battery cells 101, in order to facilitate to be mounted, the battery cells 10 can be arranged in groups, and a group of battery cells 101 form a battery module 100. The number of battery cells 101 included in battery module 100 is not limited and can be set according to requirements. For example, a battery may include a plurality of battery modules 100, which may be connected in series or in parallel or in a combination of series and parallel.

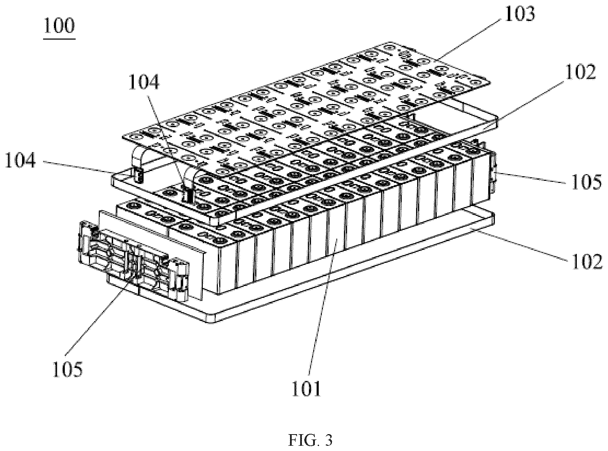

FIG. 3 shows an explosion view of a battery module 100 in some embodiments of the present application. As shown in FIG. 3, the battery module 100 includes a plurality of battery cells 101 and a frame structure for fixing the battery cells 101, the plurality of battery cells 101 are stacked with each other along the length direction. The frame structure includes end plates 105, and the end plates 105 located at both ends of the battery cell 101 along the length direction, and are used to limit the movement of the battery cells 101 along the length direction. In a specific embodiment, the frame structure further includes side plates (not shown in the FIG.), two side plates are located on both sides of the the battery cells 101 along the width direction, and the side plates are connected with the end plates 105 to form the frame structure. In another preferred embodiment, the frame structure is not provided with the side plates, and the battery cells 101 are stacked and connected through cable ties 102. The end plates 105 and cable ties 102 form the frame structure. The battery module 100 also includes the Cell Connection System (CCS) 103, and the CCS 103 includes two output electrodes 104, which are used to led out the electrical energy of the battery module 100.

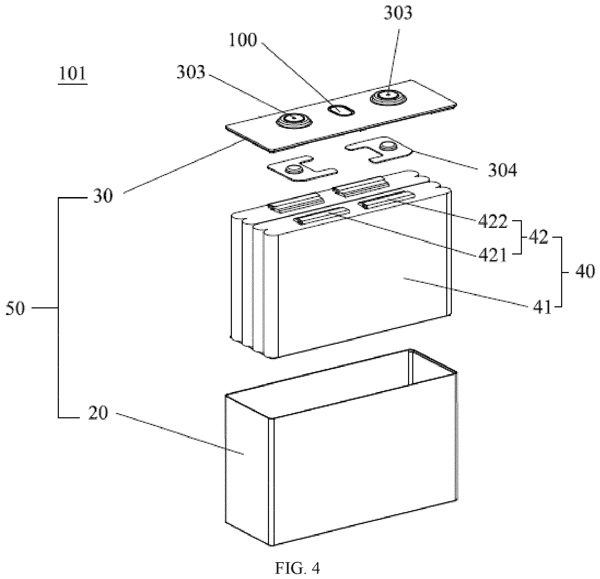

FIG. 4 is an explosion view of a battery cell 101 in some embodiments of the present application. As shown in FIG. 4, the battery cell 101 includes a shell plate 50 and an electrode assembly 40 arranged in the shell plate 50, the shell plate 50 includes an end cap assembly 30 and a shell 20 with an opening, and the electrode assembly 40 is arranged in the shell 20 through an opening in the shell 20. The electrode assembly 40 includes a main portion 41 and electrode tabs 42, and the electrode tabs 42 are extended from the main portion 41. The main portion 41 includes a positive electrode sheet, a negative electrode sheet and an isolation membrane. The main portion 41 is a winding structure formed by the winding of the positive electrode sheet, the isolation diaphragm and the negative electrode sheet, or a laminated structure formed by the stacking arrangement of the positive electrode sheet, the isolation diaphragm and the negative electrode sheet. The positive electrode tab 421 and the negative electrode tab 422 are located on a same side of the main body 41 or on opposite sides of the main body 41 respectively. As shown in FIG. 4, the positive electrode tab 421 and the negative electrode tab 422 are exemplified on the same side of main portion 41. The end cap assembly 30 covers the opening of the shell 20, so as to form a closed space for accommodating the electrode assembly 40 and the electrolyte. The end cap assembly 30 includes two electrode columns 303 for electrically connecting with the electrode tabs 42 to output electrical energy from the battery cell 101, or for connecting to an external power source to charge the battery cell 101. A pressure relief mechanism 100 is located between two electrode columns 303. The end cap assembly 30 further includes adapter sheets 304, and the electrode columns 303 are electrically connected to the electrode tabs 42 through the adapter sheets 304.

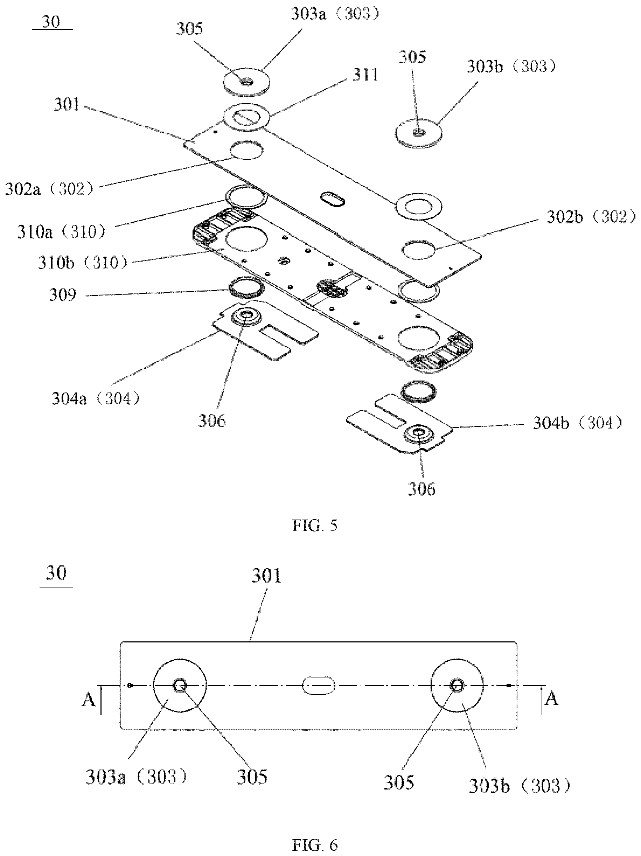

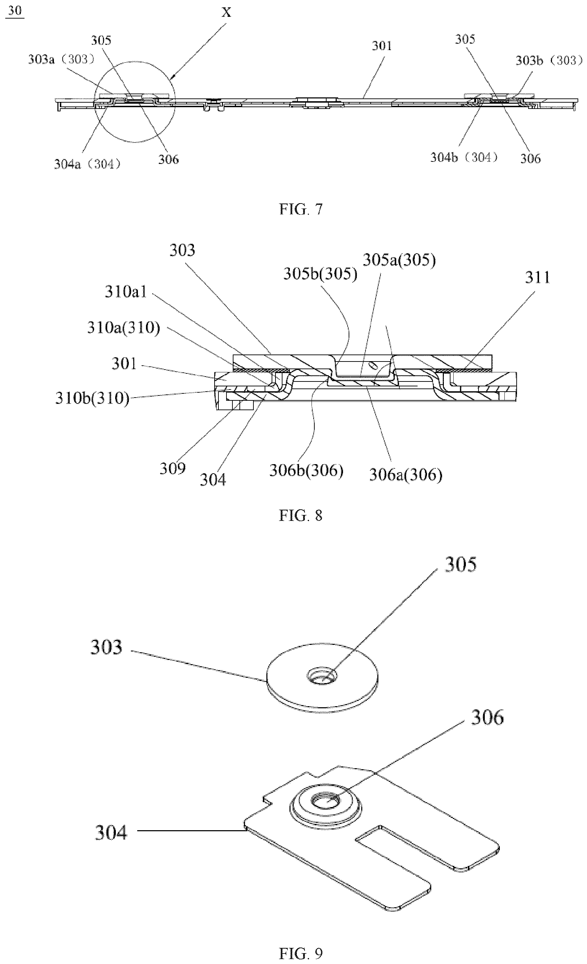

FIG. 5 is an explosion view of an end cap assembly 30 in some embodiments of the present application. FIG. 6 is top view of the end cap assembly 30 after assembled in FIG. 5. FIG. 7 is a cross-sectional view of the end cap assembly 30 along an A-A direction in FIG. 6. FIG. 8 is an enlarged view of an area X in FIG. 7. FIG. 9 is a structural schematic view of an electrode column 303 and an adapter sheet 304.

As shown in FIGS. 5 to 9, in some embodiments of the present application, the end cap assembly 30 includes an end cap sheet 301, electrode columns 303, and adapter sheets 304. The end cap sheet 301 is provided with electrode through holes 302. The electrode columns 303 are used to input or output electrical energy of the battery cell, and the electrode columns 303 cover the electrode through holes 302. Each electrode column 303 is provided with a first concave portion 305 recessed towards an interior of the battery cell 101. Each adapter sheet 304 is provided a second concave portion 306 matching with the first concave portion 305 for electrically connecting the electrode column 303 to an electrolytic cell or galvanic cell inside the battery cell 101.

The through holes 302 include a positive electrode through hole 302a and a negative electrode through hole 302b. The electrode column 303 includes a positive electrode column 303a and a negative electrode column 303b. The adapter sheet 304 includes a positive adapter sheet 304a corresponding to a positive electrode column 303a and a negative adapter sheet 304b corresponding to a negative electrode column 303b. Each electrode column 303 is provided with the first concave portion 305 recessed towards an interior of the battery cell 101 through the through hole 302. Each adapter sheet 304 is provided with the second concave portion 306 matching with the first concave portion 305. Thus, the electrode column 303 and the adapter sheet 304 are connected through the first concave portion 305 and the second concave portion 306, so that the connection of electrode column 303 and adapter sheet 304 can be avoided by welding.

The positive electrode column 303a and the negative electrode column 303b are made of aluminum and are used for welding connection with the bus bar outside the battery cell 101. The positive adapter sheet 304a is made of aluminum, the negative adapter sheet 304b is made of copper, and the end cap sheet 301 is made of aluminum and is used for welding connection with the shell plate 50.

In some embodiments, the electrode column 303 and the adapter sheet 304 are fixed by a tight fit between the first concave portion 305 and the second concave portion 306. More specifically, as shown in IGS. 7 to 9, the first concave portion 305 includes a first concave bottom portion 305a and a first concave bottom side wall 305b, and the second concave portion 306 includes a second concave bottom portion 306a and a second concave side wall 306b. The outer bottom wall of the first concave bottom portion 305a is pressed against the inner bottom wall of the second concave bottom portion 306a. In other embodiments, the outer side wall of the first concave side wall 305b is pressed against the inner side wall of the second concave side wall 306b. Thus, the second concave portion 306 tightly wraps the first concave portion 305, and the connection area is larger. For example, a die can be used to stamp the electrode column 303 and adapter sheet 304 in the shape of a plate, so that the metal electrode column 303 and adapter sheet 304 are deformed by cold extrusion at the stamping place, thus forming the first concave portion 305 and the second concave portion 306 that are tightly fitted to each other. At the position where the first concave portion 305 and the second concave portion 306 are tightly fitted, the metal material produces atomic level friction due to extrusion deformation, thus a certain tensile and shear strength are provided, so that the electrode column 303 and the adapter sheet 304 are reliably fixed and connected.

Since the electrode column 303 and adapter sheet 304 are fixed and connected by making the metal material tightly fit through cold extrusion deformation, particle impurities that affect the performance of battery unit 101 like welding connections will not be generated, and a certain operating space for welding operations like welding connections do not need to be reserved, so that the dimensional tolerance requirements for accessories are very low. For example, in case that the usual end cap assembly is made by welding process, the tolerance requirements of the accessories are limited to ± 0.05mm, while the dimensional tolerance requirements of the end cap assembly 30 for the accessories can be relaxed to ±0.3mm, so the production cost of the accessories can be reduced, and the yield of the products is significantly improved. In addition, in the prior art, when the negative electrode adapter 304b made of copper is connected to the external bus by welding, it is necessary to use a copper-aluminum composite plate for transition, and a number of different accessories are used at the two electrode through holes 302, while the end cap assembly 30 in the present application does not need to consider the problem of welding transition. In addition to the different materials and setting directions of the positive adapter sheet 304a and the negative adapter sheet 304b, the structure of the positive electrode through hole 302a and the negative electrode through hole 302b (including the configuration of accessories and accessories) can be exactly the same, thus the types of parts are reduced and the manufacturing costs is reduced.

In some embodiments, as shown in FIG. 8, the Angle θ formed between the inner side wall of the second concave side wall 306b and the inner bottom wall of the second concave bottom portion 306a is less than 90°. Thus, the second concave portion 306 forms a ring corner portion to embed the first concave portion 305, and the metal material produces sufficient plastic deformation at the ring corner portion through cold extrusion, which can further improve the connection between the electrode column 303 and the adapter sheet 304, and effectively avoid the electrode column 303 being pulled out. The Angle θ formed between the inner side wall of the second concave side wall 306b and the inner bottom wall of the second concave bottom portion 306a can be arranged by adjusting the shape of the die that is in contact with the adapter sheet 304 during stamping process.

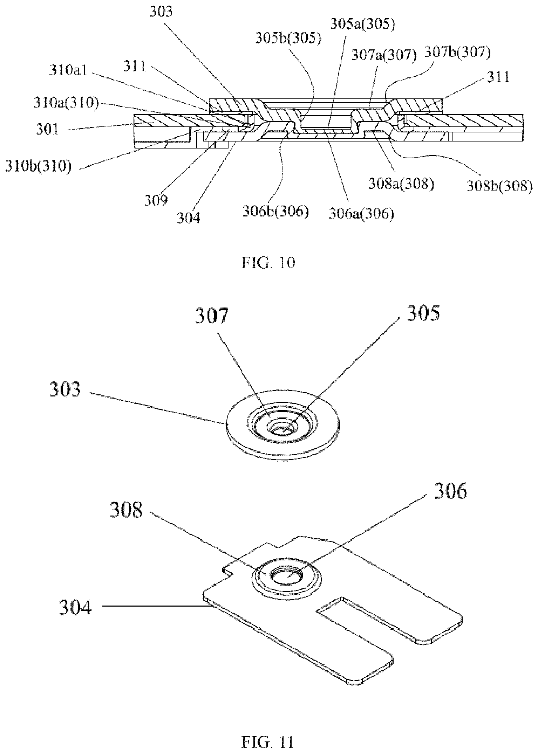

FIG. 10 is a schematic view of the end cap assembly 30 in some embodiments of the present application and the corresponding part of FIG. 8. FIG. 11 is the structural schematic view of an electrode column 303 and a adapter sheet 304 in some embodiments of the present application.

FIGS. 10 to 11 show the end cap assembly 30 in some embodiments of the present application. For ease of explanation, the reference signs of the same or corresponding structure as in the end cap assembly 30 shown in FIGS. 5 to 9 are omitted.

In some embodiments, as shown in FIGS. 10 to 11, the electrode column 303 is provided with a third concave portion 307 recessed toward the inside of the battery cell 101, and the first concave portion 305 is recessed from a third concave bottom portion 307a of the third concave portion 307 towards the interior of the battery cell 101. As shown in FIG. 11, the third concave portion 307 is provided with a third concave bottom portion 307a and a third concave side wall 307b extended inclinedly adjacent to the interior of the battery cell 101.

In some embodiments shown in FIGS. 5 to 9, the electrode column 303 does not have the third concave portion 307 described above, and the parts of electrode column 303 except the first concave portion 305 are basically parallel to the end cap sheet 301. Such a structure requires the adapter sheet 304 having a portion provided with a large deformation and pass through the through hole 302 in order to fix and connect the electrode column 303 to the adapter sheet 304 through the first concave portion 305 and the second concave portion 306. However, the metal material is easy to crack in the bending part with a large deformation, and the electrode column 303 can be provided with a part extending to the through hole 302 in a more gentle way except for the first concave portion 305 by providing the third concave portion 307. Thus, the adapter sheet 304 can be connected with the electrode column 303 through a small deformation. It can avoid cracks caused by excessive deformation of the adapter sheet 304 when the electrode column 303 and the adapter sheet 304 are connected and fixed to each other, while the deformation amplitude of the third concave portion 307 and the first concave portion 305 is relatively gentle, and the electrode column 303 will not cause cracks.

In some embodiments, as shown in FIGS. 10 to 11, the adapter sheet 304 is provided with a convex portion 308 that protrudes away from the side of the interior of the battery cell 101, and the second concave portion 306 is recessed from a convex top portion 308a towards the side of the interior of the battery cell 101. The convex portion 308 is provided with a convex bottom portion 308a and a convex side wall 308b extended inclinedly away from the interior of the battery cell 101.

In other embodiments (not shown), the adapter sheet 304 does not have the above convex portion 308, and the part other than the second concave portion 306 is basically parallel to the end cap sheet 301, which requires the electrode column 303 to pass through the through hole 302 with a large deformation to fix and connect the electrode column 303 and the adapter sheet 304. However, the adapter sheet 304 can be provided with a part extending to the through hole 302 in a more gentle manner except for the second concave portion 306 by providing the convex portion 308 as shown in FIG. 10 and FIG. 11. Thus, the electrode column 303 can be connected with the adapter sheet 304 through a small deformation. It can avoid cracks caused by excessive deformation of the electrode column 303 when the electrode column 303 and the adapter sheet 304 are connected and fixed to each other, while the deformation amplitude of the second concave portion 307 and the convex portion 308 is relatively gentle, and the adapter sheet 304 will not cause cracks.

As shown in FIG. 10, the extension of the third concave side wall 307b to the side of the interior of the battery cell 101 is generally equal to the extension of the fourth concave side wall 308b away from the side of the interior of the battery cell 101, so that the electrode column 303 and the adapter sheet 304 do not have severe deformation to avoid cracks in the metal material.

In some embodiments, as shown in FIG. 10, the third concave bottom portion 307a is tightly fitted and fixed to the convex top portion 308a. For example, the electrode column 303 and the adapter sheet 304 are further stamped to form the third concave portion 307 and the convex portion 308, respectively, so that the metal material is deformed by cold extrusion at the stamping position, thus the third concave portion 307 and convex 308 that are tightly fitted to each other are formed. Therefore, the fixed connection area between the electrode column 303 and the adapter sheet 304 is larger, which has stronger shear resistance and tensile resistance.

In some embodiments, as shown in FIGS. 5, 8, and 10, the end cap assembly 30 further includes a sealing member 309, and the sealing member 309 is sandwiched between the end cap sheet 301 and the adapter sheet 304 for sealing the interior of the battery cell 101 and the electrode through holes 302. For example, the sealing member 309 is an elastic rubber O-ring that seals the gap between the end cap sheet 301 and the adapter sheet 304 to prevent electrolyte leakage in the battery cell 101. In addition, the sealing member 309 is extruded to deform by the end cap sheet 301 and the adapter sheet 304 by means of the stamping force to the electrode column 303 and the adapter sheet 304 during the fixed connection between the electrode column 303 and the adapter sheet 304, which further improves the sealing performance.

In some embodiments, as shown in FIG. 5, FIG. 8, FIG. 10, the end cap assembly 30 further includes an insulation assembly 310, and the insulation assembly 310 includes a first insulation member 310a adjacent to the electrode through hole 302 along a direction perpendicular to a penetrating direction of the electrode through hole 302, the first insulation member 310a is configured for insulating the electrode column 303 and the end cap sheet 304, and/or insulating the adapter sheet 304 and the end cap sheet 301. The first insulation member 310a is capable of separating the electrode column 303 and/or the adapter sheet 304 from the end cap sheet 301 at the electrode through hole 302 to prevent short circuit resulting from contact between the electrode column 303 and/or the adapter sheet 304 and the end cap sheet 301.

In some embodiments, as shown in FIGS. 5, 8, and 10, the insulation assembly 310 includes a second insulation member 310b away from the electrode through hole 302 along the direction perpendicular to the penetrating direction of the electrode through hole 302, and the second insulation member 310b is configured for insulating the adapter sheet 304 and the end cap sheet 301. The second insulation member 310b is capable of separating the adapter sheet 304 from the end cap sheet 301 at a position other than the electrode through hole 302 to prevent the short circuit caused by contact between the adapter sheet 304 and the end cap sheet 301.

In some embodiments, as shown in FIGS. 5, 8, and 10, the sealing member 309 is located between the first insulation member 310a and the second insulation member 310b along the direction perpendicular to the penetrating direction of the electrode through hole 302. Thus, the sealing member 309 is sandwiched and fixed between the first insulation member 310a and the second insulation member 310b. For example, the second insulating member 310b can be fixed to the end cap sheet 301 by bonding, while the first insulating member 310a can be fixed by the joint extrusion of the end cap sheet 301, the electrode column 303 and the adapter sheet 304. The sealing member 309 can be easily fixed by being assembled between the first insulation member 310a and the second insulation member 310b, and the first insulation member 310a and the second insulation member 310b also have a sealing effect to achieve better sealing performance together with the sealing member 309.

In addition, the second insulation member 310b of the insulation positioning assembly 310 can further be fixed to the adapter sheet 304, so that the electrode column 303 connected to the adapter sheet 304 is further fixed, in particular, for example, the end cap sheet 301, the sealing member 309, the first insulation member 310a, the second insulation member 310b, the electrode column 303, the adapter sheet 304 and the insulation sheet 311 below are assembled together, and the end cap assembly 30 can be formed after stamping and connecting the electrode column 303 and the adapter sheet 304. There is no need to use any injection molding or welding connection between the accessories. It can reduce many parts that need to be used with injection molding or welding process, and the dimensional tolerance requirements for the accessories are very low, the manufacturing process is simple and the cost is low. In other embodiment, the adapter sheet 304 and/or the electrode column 303 can also be fixed to the end cap sheet 301 using an insulation member other than the second insulation member 310b, and the end cap assembly 30 can also be formed by simple assembly.

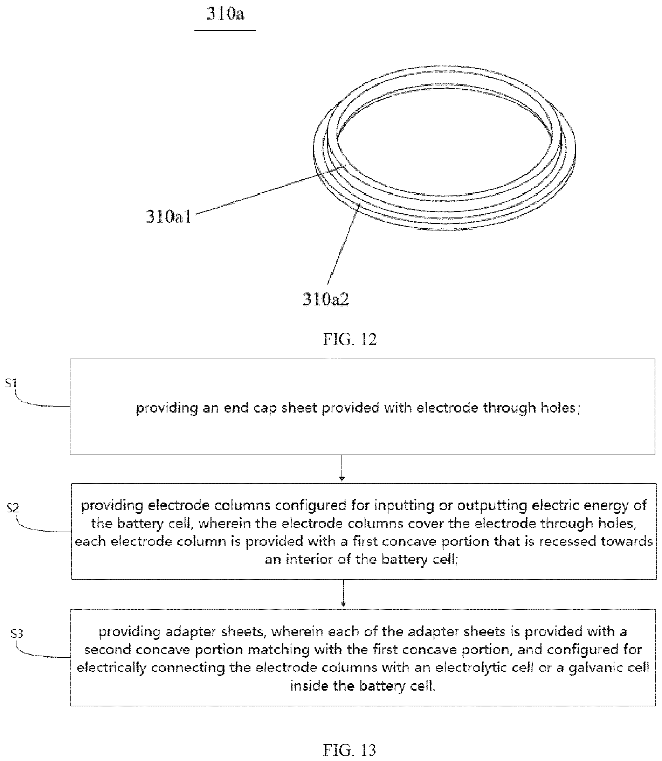

FIG. 12 shows a structural schematic view of the first insulation member 310a.

In some embodiments, as shown in FIGS. 9 and 12, the first insulation member 310a includes an extension portion 310a1 extending into the electrode through hole 302 to separate the end cap sheet 301 from the electrode column 303 and/or the adapter sheet 304. The first insulation member 310a further includes a base 310a2 located on the top cap sheet 301 adjacent to the side of the interior of the battery cell 101, and the extension portion 310a1 extending from an end of the base 310a2 away from the sealing member 309 towards and through the electrode through hole 302, which completely separates the electrode column 303 and/or the adapter sheet 304 from contact with the end cap sheet 301 at the through hole 302 to avoid short circuit. Specifically, the first insulation member 310a is in a shape of a ring.

In some embodiments, as shown in FIG. 5, the second insulation member 310b has a shape corresponding to that of the end cap sheet 301 and is fixed to the end cap sheet 301. Thus, the second insulation member 310b separates the end cap sheet 301 from the electrode assembly 40 inside the battery cell 101, thereby reliably avoiding the occurrence of short circuit.

In some embodiments, as shown in FIG. 5, FIG. 8, FIG. 10, an insulation sheet 311 is arranged between the electrode column 303 and the end cap sheet 301. The insulation sheet 311 is a plastic sheet, for example, the thickness of the insulation sheet 311 is 0.5mm, and the insulation sheet 311 separates the end cap sheet 301 from the electrode column 303, so as to more reliably avoid short circuit when both the positive electrode and the negative electrode of the battery cell 101 are connected to the end cap sheet 301 made of aluminum.

Above, the end cap assembly 30 of the embodiment of the present application is described.

In another aspect, the present application further provides a battery cell 101 including the end cap assembly 30 described above.

In another aspect, the present application further provides a battery module 100 including the battery cell 101 described above.

In a further aspect, the present application further provides a battery 500 including the battery module 100 described above.

In a further aspect, the present application further provides an electrical device including the battery 500 described above, and the battery 500 is used to supply electric energy. In the embodiment, the electrical device is a vehicle 800 as shown in FIG. 1, or the electrical device is a ship or a spacecraft.

The present application further provides a manufacturing method for an end cap assembly.

FIG. 13 shows a flowchart of a manufacturing method for an end cap assembly 30 in an embodiment of the present application.

As shown in FIG. 13, the manufacturing method of the embodiment includes:
Step S1, providing an end cap sheet 301 provided with electrode through holes 302;
Step S2, providing electrode columns 303 configured for inputting or outputting electric energy of the battery cell 101, and the electrode columns 303 cover the electrode through holes 302, each electrode column 303 is provided with a first concave portion 305 that is recessed towards an interior of the battery cell 101;
Step S3, providing adapter sheets 304, each of the adapter sheets 304 is provided with a second concave portion 306 matching with the first concave portion 305, and configured for electrically connecting the electrode columns 303 with an electrolytic cell or a galvanic cell inside the battery cell 101.

In the embodiment, the electrode column 303 and the adapter sheet 304 form the first concave portion 305 and the second concave portion 306 by a way of stamping. For example, preparing an end cap sheet 301, a sealing member 309, a first insulation member 310a, a second insulation member 310b, a flat-shaped electrode column 303, a flat-shaped adapter sheet 304, and an insulation sheet 311 as accessories of the end cap assembly 30; bonding the second insulation member 310b to a side of the end cap sheet 301 adjacent to the interior of the battery cell 101; placing the sealing member 309 and the first insulation member 310a successively between the end cap sheet 301 and the second insulation member 310b; arranging the the insulation sheet 311 and the electrode column 303 on a side of the end cap sheet 301 away from the interior of the battery cell 101; and arranging the adapter sheet 304 on a side of the second insulation member 310b adjacent to the interior of the battery cell 101 and fixing the adapter sheet 304 with the second insulation member 310b. The configuration order of the accessories in the above assembly method can be changed arbitrarily, as long as the basic structure of the end cap assembly 30 is formed. Then, contacting the electrode column 303 through a first die that enables to form a shape of the first concave portion 305; and contacting the adapter sheet 304 through a second die that enables to form a shape of the second concave portion 306. The first die pushes the material of the electrode column 303 and the adapter sheet 304 into a cavity of the second die to fully stretch and deform through stamping, so as to form the first concave portion 305 and the second concave portion 306 that are fixedly connected. In addition, the sealing member 309, the first insulation member 310a, the second insulation member 310b and the insulation sheet 311 are pressed by the force applied by stamping, and the end cap assembly 30 is then formed after being removed from the die.

In some embodiments, another manufacturing method for the end cap assembly 30 is further provided. The difference is that the die is used to perform stamping twice. Through a first stamping, forming a third concave portion 307 recessed towards an interior of the battery cell 101 on the electrode column 303, and forming a convex portion 308 protruding away from the interior of the battery cell 101 on the adapter sheet 304. Through a second stamping, forming the first concave portion 305 recessed from a bottom of the third concave portion 307 towards the interior of the battery cell 101 on the electrode column 303, and forming the second concave portion 306 recessed from a top of the convex portion 308 towards the interior of the battery cell 101 on the adapter sheet 304. In the embodiment, after forming the basic structure of the end cap assembly 30, contacting the electrode column 303 through a third die that enables to form a shape of the third concave portion 307; and contacting the adapter sheet 304 through a fourth die that enables to form a shape of the convex portion 308. Through the first stamping, the third concave portion 307 is initially connected and fixed with the top of the convex portion 308, the first die is then used to contact the third concave bottom portion 307a, and the second die is used to contact the convex top portion 308a, the first concave portion 305 and the second concave portion 306 are formed by stamping, and the end cap assembly 30 is then formed after being removed from the die.

Finally, it should be noted that the above embodiments are only used to illustrate the technical solution of the present application and not to limit the above embodiments. Although the present application has been described in detail with reference to the aforementioned embodiments, those skilled in the art should understand that they can still modify the technical solutions recorded in the aforementioned embodiments, or equivalently replace some or all of the technical features. These modifications or substitutions do not separate the essence of the corresponding technical solutions from the scope of the technical solutions of the various embodiments of the present application, and they should all be covered within the scope of the claims and specifications of the present application. Especially, as long as there is no structural conflict, the various technical features mentioned in each embodiment can be combined in any way. The present application is not limited to the specific embodiments disclosed in the specification, but includes all technical solutions falling within the scope of the claims.

## Claims

1. An end cap assembly, applied to a battery cell, comprising:
an end cap sheet, provided with electrode through holes;
electrode columns, configured for inputting or outputting electric energy of the battery cell, wherein the electrode columns cover the electrode through holes, each electrode column is provided with a first concave portion recessed towards an interior of the battery cell; and
adapter sheets, each provided with a second concave portion matching with the first concave portion and configured for electrically connecting the electrode columns with an electrolytic cell or a galvanic cell inside the battery cell.

2. The end cap assembly according to claim 1, wherein an angle θ formed between an inner side wall of the second concave portion and an inner bottom wall of the second concave portion is less than 90°.

3. The end cap assembly according to any one of claims 1 to 2, wherein an outer side wall of the first concave portion is tightly fitted with an inner side wall of the second concave portion.

4. The end cap assembly according to any one of claims 1 to 3, wherein the electrode column is provided with a third concave portion recessed towards the interior of the battery cell, and the first concave portion is recessed from a bottom of the third concave portion towards the interior of the battery cell.

5. The end cap assembly according to any one of claims 1 to 4, wherein the adapter sheet is provided with a convex portion protruding away from the interior of the battery cell, and the second concave portion is recessed from a top of the convex portion towards the interior of the battery cell.

6. The end cap assembly according to claim 5, wherein a bottom of the third concave portion is fixedly connect to the top of the convex portion by tightly fitted with the top of the convex portion.

7. The end cap assembly according to any one of claims 1 to 6, wherein the end cap assembly further comprises a sealing member, sandwiched between the end cap sheet and the adapter sheet, and configured for sealing the interior of the battery cell and the electrode through holes.

8. The end cap assembly according to claim 7, wherein the end cap assembly further comprises an insulation assembly, and the insulation assembly comprises a first insulation member adjacent to the electrode through hole along a direction perpendicular to a penetrating direction of the electrode through hole, the first insulation member is configured for insulating the electrode column and the end cap sheet, and/or insulating the adapter sheet and the end cap sheet.

9. The end cap assembly according to claim 8, wherein the insulation assembly comprises a second insulation member away from the electrode through hole along the direction perpendicular to the penetrating direction of the electrode through hole, and the second insulation member is configured for insulating the adapter sheet and the end cap sheet.

10. The end cap assembly according to claim 9, wherein the sealing member is located between the first insulation member and the second insulation member along the direction perpendicular to the penetrating direction of the electrode through hole.

11. The end cap assembly according to claim 8, wherein the first insulation member comprises an extension portion extending into the electrode through hole to separate the end cap sheet from the electrode column and/or the adapter sheet.

12. The end cap assembly according to any one of claims 1 to 11, wherein an insulation sheet is arranged between the electrode column and the end cap sheet.

13. A battery cell, comprising the end cap assembly according to any one of claims 1 to 12.

14. A battery module, comprising the battery cell according to claim 13.

15. A battery, comprising the battery module according to claim 14.

16. An electrical device, comprising the battery according to claim 14, wherein the battery is used to supply electric energy.

17. A manufacturing method for an end cap assembly, comprising:
providing an end cap sheet provided with electrode through holes;
providing electrode columns configured for inputting or outputting electric energy of the battery cell, wherein the electrode columns cover the electrode through holes, each electrode column is provided with a first concave portion recessed towards an interior of the battery cell; and
providing adapter sheets, wherein each of the adapter sheets is provided with a second concave portion matching with the first concave portion, and configured for electrically connecting the electrode columns with an electrolytic cell or a galvanic cell inside the battery cell.

18. The manufacturing method according to claim 17, wherein the electrode column and the adapter sheet form the first concave portion and the second concave portion by a way of stamping.

19. The manufacturing method according to claim 17 or 18, wherein
forming a third concave portion recessed towards the interior of the battery cell on the electrode column, and forming a convex portion protruding away from the interior of the battery cell on the adapter sheet, through a first stamping; and
forming the first concave portion recessed from a bottom of the third concave portion towards the interior of the battery cell on the electrode column, and forming the second concave portion recessed from a top of the convex portion towards the interior of the battery cell on the adapter sheet, through a second stamping.

20. The manufacturing method according to claim 18 or 19, wherein
further providing a sealing member sandwiched between the end cap sheet and the adapter sheet, and pressing the sealing member to be deformed by the end cap sheet and the adapter sheet, through stamping the electrode column and the adapter sheet.
